Europäisches Patentamt

European Patent Office

Office européen des brevets

(19)

(11) Numéro de publication: **0 002 988**
**B1**

(12) **FASCICULE DE BREVET EUROPEEN**

(45) Date de publication du fascicule du brevet: **10.02.82**

(21) Numéro de dépôt: **78400253.7**

(22) Date de dépôt: **21.12.78**

(51) Int. Cl.³: **B 04 C 9/00,** C 08 F 10/02,
C 08 F 6/10 //B01D45/12

(54) Dispositif et procédé de séparation sous haute pression.

(30) Priorité: **28.12.77 FR 7739506**

(43) Date de publication de la demande:
**11.07.79 Bulletin 79/14**

(45) Mention de la délivrance du brevet:
**10.02.82 Bulletin 82/6**

(84) Etats contractants désignés:
**BE CH DE GB IT LU NL SE**

(56) Documents cités:
**FR - A - 2 218 143**

(73) Titulaire: **Société Chimique des Charbonnages
Tour Aurore Place des Reflets Cédex no 5
F-92080 Paris La Défense 2 (FR)**

(72) Inventeur: **Levresse, Bernard
Saint Arnoult
F-76490 Caudebec en Caux (FR)**

(74) Mandataire: **Dubost, Thierry et al,
Société Chimique des Charbonnages Service
Propriété Industrielle B.P. No 1
F-62160 Bully Les Mines (FR)**

EP 0 002 988 B1

Courier Press, Leamington Spa, England.

Dispositif et procédé de séparation sous haute pression

L'invention se rapporte à la séparation sous haute pression de fluides partiellement miscibles.

Dans les opérations de synthèse sous haute pression de l'industrie chimique, il est appréciable, lorsque les taux de conversion sont faibles, d'effectuer sous pression la séparation des phases afin de recycler aussitôt la phase non transformée.

On connaît des dispositifs de séparation sous haute pression consistant en une enceinte verticale cylindrique dans laquelle l'alimentation est réalisée par une arrivée tangentielle sensiblement à mi-hauteur du cylindre. Le principal inconvénient de ces appareils réside dans le fait que, fonctionnant par réduction de la vitesse de circulation des fluides et par décantation gravitationnelle, leur efficacité est proportionnelle à leur volume, ce qui conduit à des appareils encombrants, lourds et coûteux.

Le brevet francais FR - A - 2.218.143 décrit aussi un séparateur haute pression comprenant une enceinte verticale cylindrique munie d'un couvercle, ce couvercle portant un récipient en forme de cloche allongée, plongeant à l'intérieur de l'enceinte, ce récipient contenant un cylindre interne coaxial et formant avec celui-ci un espace annulaire dans lequel débouche le conduit d'alimentation.

L'object de la présente invention est donc la réalisation de dispositifs de séparation sous haute pression dont l'efficacité, grâce à un fonctionnement de type différent des appareils conventionnels, ne soit pas liée directement au volume.

La présente invention concerne donc un dispositif de séparation sous haute pression pour un mélange polyphasique constitué par un gaz chargé de particules liquides, comprenant:

a) une enceinte verticale cylindrique dans laquelle plonge un dispositif d'arrivée du mélange et munie sur sa paroi inférieure d'un orifice pour le conduit d'évacuation des liquides séparés; caractérisé en ce qu'il comprend en outre:

b) un cyclone vertical en communication avec l'enceinte et muni sur sa paroi supérieure d'un orifice pour le conduit d'évacuation des gaz séparés dans le cyclone et

c) un éjecteur composé d'une buse capable d'accroître la vitesse du mélange polyphasique, d'une zone de mélange permettant l'entraînement des liquides séparés dans le cyclone et d'un diffuseur raccordé au dispositif d'arrivée plongeant dans l'enceinte et capable de réduire la vitesse du mélange.

Généralement, la buse de l'éjecteur qui alimente l'enceinte en mélange polyphasique est raccordée, par l'intermédiaire d'une vanne, au réacteur de synthèse sous haute pression. Par haute pression, on entend, en ce qui concerne le dispositif de séparation, des pressions comprises entre 50 et 500 bars; naturellement, la pression dans le réacteur de synthèse peut être très supérieure à ces valeurs et atteindre plusieurs milliers de bars.

Les dispositifs d'arrivée du mélange utilisables dans l'enceinte cylindrique selon l'invention peuvent être de différents types. Il est tout d'abord possible de prévoir un dispositif de type conventionnel, c'est-à-dire réalisant une arrivée tangentielle sensiblement à mi-hauteur du cylindre. Cependant, il est plus avantageux de prévoir un dispositif d'arrivée tel que le jet du mélange polyphasique ait une direction parallèle à l'axe du cylindre, c'est-à-dire tel que l'écoulement du mélange est orienté perpendiculairement à la surface de séparation des phases. Un exemple de tel dispositif est constitué par un tube conique dont le sommet est situé dans la zone supérieure de l'enceinte cylindrique et dont l'angle au sommet est compris entre 4 et 30 degrés. Un autre exemple est constitué par un cône dont l'extrémité est fermée par une surface circulaire percée de trous,· en forme de pomme d'arrosoir. On peut aussi avantageusement prévoir un dispositif d'arrivée tel que le jet du mélange polyphasique soit orienté vers la surface de séparation des phases sans être ni perpendiculaire ni parallèle à cette surface. Un exemple d'un tel dispositif est constitué par un tube parallèle à l'axe du cylindre et dont l'extrémité est coudée selon une direction faisant avec la verticale un angle inférieur ou égal à 80° dans le sens du fond de l'enceinte cylindrique.

Dans le cadre de l'invention, on distingue essentiellement deux types de dispositif de séparation sous haute pression. Dans les dispositifs du premier type, le cyclone vertical et l'éjecteur sont placés tous les deux à l'intérieur de l'enceinte cylindrique. Dans ce cas, le cyclone comporte dans la partie supérieure de sa paroi latérale un orifice d'admission des gaz séparés dans l'enceinte dont la section est définie de manière à obtenir une vitesse d'entrée appropriée en fonction du mélange à séparer; le cyclone comporte également à sa base un conduit d'évacuation des liquides séparés qui est raccordé directement à la zone de mélange de l'éjecteur. Dans les dispositifs du second type, le cyclone vertical et l'éjecteur sont placés tous les deux à l'extérieur de l'enceinte cylindrique. Dans ce cas, le cyclone est raccordé à la paroi supérieure de l'enceinte par un conduit dans lequel circulent les gaz séparés dans l'enceinte; le cyclone comporte également un conduit d'évacuation des liquides séparés qui est raccordé à la zone de mélange de l'éjecteur par l'intermédiaire d'une vanne. Cette vanne permet, le cas échéant, d'entraîner une partie des gaz en surplus des liquides séparés et donc de moduler le débit et la composition du fluide acheminé vers l'éjecteur en fonction de l'efficacité de cet éjecteur, notamment lorsque des travaux d'entretien conduisent à remplacer un éjecteur par un autre éjecteur de géométrie différente. Facultativement, les dispositifs de séparation du second type pourront en outre comporter, entre ladite vanne et l'éjecteur, un embranchement réunissant au conduit d'évacuation des liquides séparés dans le cyclone un conduit d'alimentation en gaz; cette alimentation en gaz permettra, par le moyen d'une vanne, de moduler comme précédemment le débit et la composition du fluide acheminé vers l'éjecteur.

La présente invention concerne aussi l'application des dispositifs précédemment décrits à l'équipement des installations de synthèse du polyéthylène sous haute pression. Il est connu en effet de polymériser l'éthylène sous une pression de 500 à 3000 bars et à une température de 160°C à 350°C en présence d'un catalyseur, de détendre le mélange issu du réacteur jusqu'à une pression comprise entre 50 et 500 bars, puis de séparer sous cette pression le polymère liquide et le monomère gazeux constituant ce mélange. L'invention concerne donc un procédé amélioré consistant à effectuer la séparation sous pression dans l'un des dispositifs précédemment décrits, la vitesse d'entrée des gaz dans le cyclone étant comprise entre 0,5 et 20 m/s.

Dans ce procédé amélioré, lorsqu'un dispositif de séparation du second type est utilisé (c'est-à-dire avec cyclone et éjecteur extérieurs), il est particulièrement avantageux de prévoir, entre la vanne de vidange du cyclone et l'éjecteur, une alimentation par gaz éthylène sous une pression inférieure à la pression régnant dans l'enceinte cylindrique et de préférence sous une pression supérieure à la pression critique de l'éthylène (51 bars). De préférence, l'éthylène alimentant ainsi l'éjecteur se trouve à une température inférieure à 120°C et représente un débit q inférieur à 30% du débit Q du mélange issu du réacteur. Cette technique a pour effet de refroidir l'enceinte cylindrique de manière appréciable et donc de ralentir la poursuite de la réaction de polymérisation dans ladite enceinte.

L'éjecteur utilisé dans le procédé selon l'invention avec un dispositif de séparation du second type peut être défini plus précisément par sa section $S_1$ au col de la buse et par sa section $S_3$ au col du diffuseur; on choisira ainsi de préférence un rapport $Q/S_1$ compris entre 0,20 et 1,35 t/h.mm² et un rapport

$$\frac{q+Q}{S_3}$$

compris entre 0,10 et 0,30 t/h.mm². On pourra aussi avantageusement adapter, en aval du col de la buse, un divergent de section de sortie $S'_1$, le rapport des sections $S'_1/S_1$ étant compris entre 1 et 3.

Dans le procédé de polymérisation amélioré, lorsqu'un dispositif de séparation du premier type est utilisé, l'éjecteur situé à l'intérieur de l'enceinte a pour fonction principale de recycler les liquides séparés dans le cyclone. Compte tenu du faible débit de ceux-ci, la géométrie de l'éjecteur peut donc être définie de manière moins restrictive que dans le cas précédent. Enfin, il reste toujours possible et avantageux de disposer sur le conduit d'alimentation en mélange réactionnel, entre le réacteur et l'entrée de l'enceinte cylindrique, un éjecteur du type défini précédemment alimenté en gaz éthylène sous une pression inférieure à la pression régnant dans l'enceinte cylindrique.

Quel que soit le type de dispositif de séparation utilisé dans le procédé amélioré, il est avantageux de purifier les gaz séparés dans le cyclone puis refroidis en les faisant passer, à une température supérieure d'au moins 20°C à la température de fusion des bas polymères qu'ils contiennent, dans au moins un cyclone standard avec une vitesse d'entrée comprise entre 1 et 10 m/s, en les refroidissant à nouveau jusqu'à une température inférieure à la température de fusion desdits bas polymères et en les faisant passer dans au moins un cyclone chauffé avec une vitesse d'entrée comprise entre 2 et 20 m/s.

La présente invention est aussi applicable à la copolymérisation de l'éthylène avec les $\alpha$-oléfines telles que propylène, butène-1, hexène-1. Lorsqu'on emploie un catalyseur capable de produire des radicaux libres, l'invention est applicable à la copolymérisation de l'éthylène avec des comonomères polaires tels que l'oxyde de carbone, l'anhydride maléique, les esters vinyliques. Lorsqu'on emploie un catalyseur renfermant un composé d'un métal de transition, l'invention est applicable à la terpolymérisation de l'éthylène avec une $\alpha$-oléfine telle que propène et avec un dioléfine non conjuguée.

De manière parfaitement connue, on pourra aussi trouver dans le mélange réactionnel un ou plusieurs agents de transfert de chaîne, tels que par exemple l'hydrogène, pour régler et contrôler les caractéristiques du polymère. Le mélange réactionnel pourra encore comporter un diluant inerte; lorsque le catalyseur renferme un composé d'un métal de transition, il pourra s'agir d'un hydrocarbure tel que propane ou butane à raison de 1 à 20% en poids par rapport au mélange gazeux.

Ainsi, dans l'exposé précédent de l'invention et de ses aspects particuliers, on doit entendre par gaz le courant d'éthylène renfermant éventuellement un ou plusieurs comonomères et/ou un ou plusieurs agents de transfert et/ou un ou plusieurs diluants inertes. Par catalyseur capable de produire des radicaux libres, on doit entendre l'oxygène, les peroxydes et les peresters. Par catalyseur renfermant un composé d'un métal de transition, on entend à titre d'exemple un système catalytique comprenant (a) un activateur organométallique tel que par exemple trialkylaluminium, halogénodialkylaluminium ou alkylsiloxalane et (b) un composé halogéné d'un métal de transition des groupes IV A à VI A éventuellement fixé sur un support. Parmi ces composés, on peut citer comme les plus usuels les complexes TT-allylique ou benzylique du chrome, du zirconium et du titane, le trichlorure de vanadium, le trichlorure de titane, éventuellement synchristallisé avec le chlorure d'aluminium et éventuellement supporté par ou cobroyé avec un composé halogéné du magnésium ou du zinc. Ces catalyseurs sont de préférence employés sous forme de solutions dans un diluant inerte ou bien sous forme de dispersion.

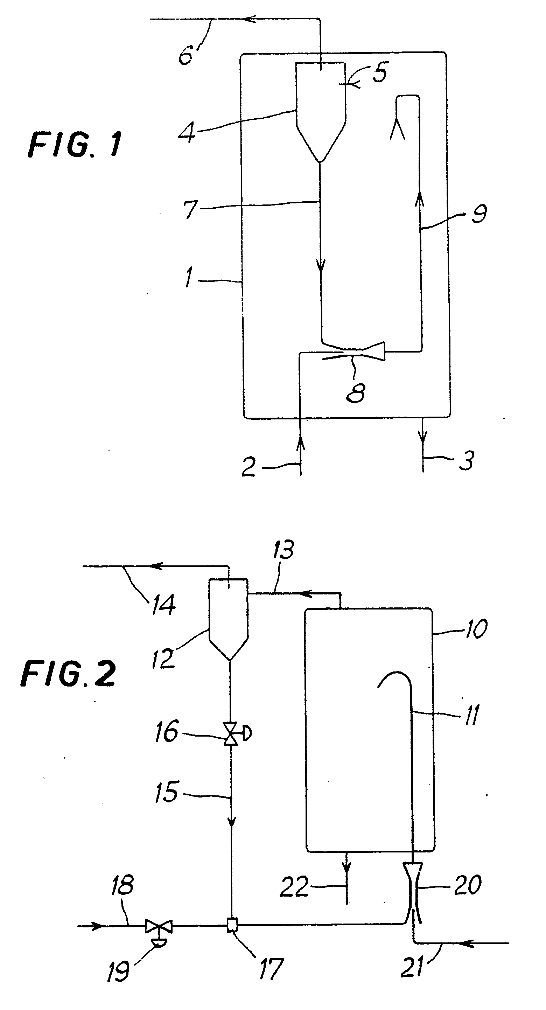

L'invention sera mieux comprise par référence aux figures. La figure 1 représente un dispositif de séparation sous haute pression du premier type. Comme précédemment indiqué, ce dispositif comprend une enceinte verticale cylindrique 1 alimentée en mélange polyphasique par un conduit 2 provenant d'un réacteur et munie sur sa paroi inférieure d'un orifice pour le conduit d'évacuation 3 des liquides séparés. Un cyclone vertical 4 est en communication avec l'enceinte par le moyen d'un orifice 5 d'admission des gaz séparés dans l'enceinte et est muni sur sa paroi supérieure d'un orifice pour le conduit d'évacuation 6 des gaz séparés dans le cyclone. Le cyclone comporte à sa base un conduit d'évacuation 7 des liquides séparés qui est raccordé directement à un éjecteur 8 comprenant buse, zone de mélange et diffuseur. Ce dernier est raccordé à un dispositif d'arrivée 9 plongeant dans l'enceinte. Le dispositif d'arrivée représenté sur la figure est un tube parallèle à l'axe de l'enceinte 1 et terminé par un cône de faible angle au sommet.

La figure 2 représente un dispositif de séparation sous haute pression du second type. Comme précédemment indiqué, ce dispositif comprend une enceinte verticale cylindrique 10 dans laquelle plonge un dispositif d'arrivée 11 du mélange; le dispositif d'arrivée représenté sur la figure est un tube parallèle à l'axe de l'enceinte et dont l'extrémité est coudée selon und direction orientée vers le fond de l'enceinte. Un cyclone vertical 12 est raccordé à l'enceinte par un conduit 13 dans lequel circulent les gaz séparés dans ladite enceinte. Ce cyclone est muni sur sa paroi supérieure d'un orifice pour le conduit d'évacuation 14 des gaz séparés. Le cyclone comporte également un conduit d'évacuation 15 des liquides séparés qui est raccordé, par l'intermédiaire d'une vanne 16, à un embranchement 17. Cet embranchement réunit au conduit 15 un conduit 18 qui permet, par le moyen d'une vanne 19, d'alimenter en gaz un éjecteur 20. Cet éjecteur est aussi alimenté en mélange polyphasique par un conduit 21 provenant d'un réacteur (non représenté) sous haute pression. Enfin, l'enceinte est munie d'un conduit 22 d'évacuation des liquides séparés.

Les exemples non limitatifs suivants illustrent l'invention.

Exemples 1 à 3

On considère une installation de fabrication de polyéthylène basse densité par polymérisation de l'éthylène sous haute pression, à haute température et en présence d'un initiateur radicalaire peroxyde. A la sortie du réacteur, le mélange est détendu puis envoyé dans une enceinte verticale cylindrique dans laquelle la pression est de 250 bars.

Dans l'exemple comparatif 1, l'enceinte constitue en soi le dispositif de séparation sous haute pression; à la sortie supérieure de l'enceinte, les gaz séparés sont donc acheminés directement vers un réfrigérant. Par contre, dans les exemples 2 et 3 selon l'invention, le dispositif de séparation sous haute pression comporte, outre l'enceinte et à l'extérieur de celle-ci un cyclone dans lequel les gaz entrent à une vitesse de 5 m/s, un embranchement pour l'injection de gaz et un éjecteur. Ce dispositif est donc conforme à celui représenté sur la figure 2, à l'exception de la nature particulière du dispositif d'arrivée du mélange dans l'enceinte. En effet, ce dispositif est constitué:

— dans les exemples 1 et 2, d'une arrivée tangentielle de type conventionnel sensiblement à mi-hauteur du cylindre;
— dans l'exemple 3, d'un tube terminé par un cône dont l'angle au sommet est de 15°.

A la sortie de l'enceinte, les gaz séparés sont acheminés vers un réfrigérant, à la sortie duquel les gaz refroidis sont soumis à une nouvelle étape de séparation.

L'efficacité des trois dispositifs de séparation est mesurée par la quantité de polymères liquides récupérés dans l'étape de séparation à laquelle sont soumis les gaz après réfrigération. En effet, il est bien connu que la circulation d'une quantité notable de polymères liquides dans les conduits normalement prévus pour les gaz a pour conséquence de provoquer l'encrassement et même le bouchage de ces conduits. Par différence entre la quantité récupérée au moyen de l'enceinte seule et celle récupérée au moyen des dispositifs selon l'invention, on obtient donc une bonne mesure de l'efficacité de ceux-ci. Les quantités P indiquées dans le tableau ci-dessous sont rapportées à la production de polymère dans l'installation et exprimées en grammes par tonne.

| Exemple | 1 | 2 | 3 |
|---------|-------|-----|-----|
| P(g/t)  | 1.745 | 990 | 780 |

Exemples 4 et 5

On considère une installation de fabrication de polyéthylène haute densité par polymérisation de l'éthylène sous haute pression, à haute température et en présence d'un catalyseur de type Ziegler comprenant du trichlorure de titane et un activateur alkylaluminium. A la sortie du réacteur, le mélange est détendu puis envoyé dans un dispositif de séparation sous haute pression.

Dans l'exemple comparatif 4, le dispositif employé est identique à celui de l'exemple 1; dans l'exemple 5, le dispositif employé est identique à celui de l'exemple 2. Comme dans les exemples précédents, l'efficacité des dispositifs de séparation est déterminée par la mesure des quantités P de polymères liquides récupérés après réfrigération des gaz, exprimées en grammes par tonne.

Pour l'exemple 4, P=300 g/t.
Pour l'exemple 5, P=160 g/t.

## Revendications

1. Dispositif de séparation sous haute pression d'un mélange polyphasique constitué par un gaz chargé de particules liquides, comprenant (a) une enceinte verticale cylindrique dans laquelle plonge un dispositif d'arrivée du mélange et munie sur sa paroi inférieure d'un orifice pour le conduit d'évacuation des liquides séparés, caractérisé en ce qu'il comprend en outre:
(b) un cyclone vertical en communication avec l'enceinte et muni sur sa paroi supérieure d'un orifice pour le conduit d'évacuation des gaz séparés dans le cyclone, et
(c) un éjecteur composé d'une buse capable d'accroître la vitesse du mélange polyphasique, d'une zone de mélange permettant l'entraînement des liquides séparés dans le cyclone, et d'un diffuseur raccordé au dispositif d'arrivée plongeant dans l'enceinte et capable de réduire la vitesse du mélange.

2. Dispositif selon la revendication 1, caractérisé en ce que le dispositif d'arrivée du mélange est tangentiel à l'enceinte.

3. Dispositif selon la revendication 1, caractérisé en ce que le dispositif d'arrivée du mélange est parallèle à l'axe de l'enceinte.

4. Dispositif selon la revendication 3, caractérisé en ce que le dispositif d'arrivée du mélange est constitué par un tube conique dont le sommet est situé dans la zone supérieure de l'enceinte cylindrique et dont l'angle au sommet est compris entre 4 et 30 degrés.

5. Dispositif selon la revendication 1, caractérisé en ce que le dispositif d'arrivée du mélange est constitué par un tube parallèle à l'axe de l'enceinte cylindrique et dont l'extrémité est coudée selon une direction faisant avec la verticale un angle inférieur ou égal à 80° dans le sens du fond de l'enceinte cylindrique.

6. Dispositif selon l'une des revendications 1 à 5, caractérisé en ce que le cyclone (b) et l'éjecteur (c) sont placés tous les deux à l'intérieur de l'enceinte (a).

7. Dispositif selon la revendication 6, caractérisé en ce que le cyclone comporte dans la partie supérieure de sa paroi latérale un orifice d'admission des gaz séparés dans l'enceinte.

8. Dispositif selon la revendication 7, caractérisé en ce que la section dudit orifice d'admission est construite de manière à permettre une vitesse d'entrée des gaz dans ledit cyclone comprise entre 0,5 et 20 m/s.

9. Dispositif selon l'une des revendications 6 à 8, caractérisé en ce que le cyclone comporte à sa base un conduit d'évacuation des liquides séparés qui est raccordé directement à la zone de mélange de l'éjecteur.

10. Dispositif selon l'une des revendications 1 à 5, caractérisé en ce que le cyclone (b) et l'éjecteur (c) sont placés tous les deux à l'extérieur de l'enceinte (a).

11. Dispositif selon la revendication 10, caractérisé en ce que le cyclone est raccordé à la paroi supérieure de l'enceinte par un conduit dans lequel circulent les gaz séparés dans l'enceinte.

12. Dispositif selon l'une des revendications 10 et 11, caractérisé en ce que le cyclone comporte un conduit d'évacuation des liquides séparés qui est raccordé à la zone de mélange de l'éjecteur par l'intermédiaire d'une vanne.

13. Dispositif selon la revendication 12, caractérisé en ce qu'il comporte, entre ladite vanne et l'éjecteur, en embranchement réunissant au conduit d'évacuation des liquides séparés dans le cyclone un conduit d'alimentation en gaz.

14. Procédé de polymérisation de l'éthylène sous une pression de 500 à 3000 bars et à une température de 160°C à 350°C en présence d'un catalyseur, selon lequel on détend le mélange issu du réacteur jusqu'à une pression comprise entre 50 et 500 bars puis on sépare sous cette pression le polymère liquide et le monomère gazeux constituant ledit mélange, caractérisé en ce que la séparation sous pression est effectuée dans un dispositif selon la revendication 1 et en ce que la vitesse d'entrée des gaz dans le cyclone est comprise entre 0,5 et 20 m/s.

15. Procédé selon la revendication 14, caractérisé en ce que la séparation sous pression est effectuée dans un dispositif selon la revendication 13 et en ce que le gaz alimenté par l'embranchement est de l'éthylène à une pression inférieure à la pression régnant dans l'enceinte cylindrique.

16. Procédé selon la revendication 15, caractérisé en ce que le débit de l'éthylène alimenté par l'embranchement représente moins de 30% du débit du mélange issu du réacteur.

## Patentansprüche

1. Vorrichtung zum unter Hochdruck erfolgenden Trennen eines mehrphasigen Gemischs aus einem mit flüssigen Teilchen beladenen Gas, mit (a) einem senkrechten zylindrischen Behälter, in den eine Einlassvorrichtung für das Gemisch eintaucht und der an seiner unteren Wand mit einer Öffnung für die Entleerungsleitung der getrennten Flüssigkeiten versehen ist, gekennzeichnet (b) durch einen senkrechten Zyklon, der mit dem Behälter in Verbindung steht und an seiner oberen Wand mit einer Öffnung für die Entleerungsleitung der im Zyklon getrennten Gase versehen ist, und (c) durch einen Ejektor mit einer Düse, die die Geschwindigkeit des mehrstufigen Gemischs erhöhen kann, mit einer Mischzone, die den Antrieb der im Zyklon getrennten Flüssigkeiten ermöglicht, und mit einem Diffusor, der an die in den Behälter eintauchende Einlassvorrichtung angeschlossen ist und die Geschwindigkeit der Mischzone verringern kann.

2. Vorrichtung nach Anspruch 1, dadurch gekennzeichnet, dass die Einlassvorrichtung für das Gemisch zum Behälter tangential angeordnet ist.

3. Vorrichtung nach Anspruch 1, dadurch gekennzeichnet, dass die Einlassvorrichtung für das Gemisch zur Achse des Behälters parallel angeordnet ist.

4. Vorrichtung nach Anspruch 3, dadurch gekennzeichnet, dass die Einlassvorrichtung für das Gemisch aus einem konischen Rohr besteht, dessen Scheitel sich in der oberen Zone des zylindrischen Behälters befindet und dessen Scheitelwinkel 4° bis 30° beträgt.

5. Vorrichtung nach Anspruch 1, dadurch gekennzeichnet, dass die Einlassvorrichtung für das Gemisch aus einem Rohr besteht, das zur Achse des zylindrischen Behälters parallel ist und dessen Ende in einer Richtung umgebogen ist, die zum Boden des zylindrischen Behälters hin mit der Senkrechten einen Winkel von kleiner oder gleich 80° einschliesst.

6. Vorrichtung nach einem der Ansprüche 1 bis 5, dadurch gekennzeichnet, dass der Zyklon (b) und der Ejektor (c) innerhalb des Behälters (a) angeordnet sind.

7. Vorrichtung nach Anspruch 6, dadurch gekennzeichnet, dass der Zyklon im oberen Teil seiner Seitenwand eine Einlassöffnung für die im Behälter getrennten Gase aufweist.

8. Vorrichtung nach Anspruch 7, dadurch gekennzeichnet, dass der Querschnitt der Einlassöffnung derart bemessen ist, dass er eine Eintrittsgeschwindigkeit der Gase in den Zyklon von 0,5 bis 20 m/s zulässt.

9. Vorrichtung nach einem der Ansprüche 6 bis 8, dadurch gekennzeichnet, dass der Zyklon an seinem Unterteil für die getrennten Flüssigkeiten eine Entleerungsleitung aufweist, die unmittelbar an die Mischzone des Ejektors angeschlossen ist.

10. Vorrichtung nach einem der Ansprüche 1 bis 5, dadurch gekennzeichnet, dass der Zyklon (b) und der Ejektor (c) ausserhalb des Behälters (a) angeordnet sind.

11. Vorrichtung nach Anspruch 10, dadurch gekennzeichnet, dass der Zyklon an der oberen Wand der Behälters mittels einer Leitung angeschlossen ist, in der die im Behälter getrennten Gase strömen.

12. Vorrichtung nach Anspruch 10 oder 11, dadurch gekennzeichnet, dass der Zyklon für die getrennten Flüssigkeiten eine Entleerungsleitung aufweist, die über ein Ventil an die Mischzone des Ejektor angeschlossen ist.

13. Vorrichtung nach einem der Ansprüche 10 bis 12, gekennzeichnet durch eine zwischen dem Ventil und dem Ejektor angeordnete Abzweigung, die mit der Entleerungsleitung für die im Zyklon getrennten Flüssigkeiten eine Leitung zur Speisung mit Gas verbindet.

14. Verfahren zur Polymerisation von Äthylen bei einem Druck von 500 bis 3000 bar und einer Temperatur von 160 bis 350°C in Anwesenheit eines Katalysators, wobei das aus dem Reaktor ausgetretene Gemisch bis auf einen Druck von 50 bis 500 bar entspannt wird, wonach bei diesem Druck das flüssige Polymer und das das Gemisch bildende gasförmige Monomer getrennt werden, dadurch gekennzeichnet, dass die unter Druck erfolgende Trennung in einer Vorrichtung nach Anspruch 1 ausgeführt wird und dass die Eintrittsgeschwindigkeit der Gase in den Zyklon 0,5 bis 20 m/sec beträgt.

15. Verfahren nach Anspruch 14, dadurch gekennzeichnet, dass die unter Druck erfolgende Trennung in der Vorrichtung nach Anspruch 13 ausgeführt wird und dass das durch die Abzweigung zugeführte Gas Äthylen mit einem Druck ist, der kleiner als der im zylindrischen Behälter herrschende Druck ist.

16. Verfahren nach Anspruch 15, dadurch gekennzeichnet, dass die Durchsatzmenge des durch die Abzweigung zugeführten Äthylens wenigstens 30% der Durchsatzmenge des vom Reaktor abgegebenen Gemischs beträgt.

**Claims**

1. A device for separating under high pressure a polyphase mixture consisting of a gas charged with liquid particles, comprising:

(a) a vertical cylindrical enclosure having inlet means for supplying the said mixture and an outlet at its lower end for discharging separated liquids therefrom, characterized in that it further comprises:

(b) a vertical cyclone in communication with said enclosure and having a gas outlet at its upper end for discharging separated gases therefrom, and

(c) an ejector comprising a nozzle through which the polyphase mixture is fed to increase its speed, a mixing zone for entraining the separated liquids from said cyclone and a diffuser for reducing the speed of the resultant mixture, said diffuser being connected to the inlet means for supplying the mixture to the enclosure.

2. The device of claim 1, characterized in that the inlet means for supplying the said mixture is tangential to the enclosure.

3. The device of claim 1, characterized in that said inlet means for supplying the said mixture is parallel to the axis of said enclosure.

4. The device of claim 3, characterized in that said inlet means for supplying the said mixture comprises a tube that extends into said enclosure and terminates in an opening cone located in the upper portion of said cylindrical enclosure, the angle of the apex of said cone being from 4 to 30 degrees.

5. The device of claim 1, characterized in that the inlet means for supplying the said mixture comprises a tube parallel to the axis of said cylindrical enclosure, the end of said tube being bent toward the bottom of the cylindrical enclosure and forming, with the vertical in the downward direction, an angle that is less than or equal to 80°.

6. The device according to any one of claims 1 to 5, characterized in that said cyclone (b) and said ejector (c) are both located inside said enclosure (a).

7. The device of claim 6, characterized in that said cyclone includes, in its upper part, an inlet orifice for admitting the gases separated in said enclosure.

8. The device of claim 7, characterized in that the cross-section of said inlet orifice is constructed so as to obtain an entry speed of the gases into said cyclone of between 0.5 and 20 m/second.

9. The device according to any of claims 6 to 8, characterized in that the liquid outlet at the lower end of the cyclone is connected to said mixing zone of said ejector via a valve.

10. The device according to any one of claims 1 to 5, characterized in that said cyclone (b) and said ejector (c) are both located outside said enclosure (a).

11. The device of claim 10, characterized in that said cyclone is connected to the upper end of said enclosure by a conduit for conveying the gases separated in said enclosure.

12. The device according to any of claims 10 and 11, characterized in that said cyclone comprises an outlet for discharging separated liquids, said outlet being connected to said mixing zone of said ejector via a valve.

13. The device according to any of claims 10 to 12, characterized in that it comprises, between said valve and said ejector, a connection with a conduit for supplying gas to the liquids separated in said cyclone.

14. A process for the polymerization of ethylene under a pressure of 500 to 3,000 bars and at a temperature of 160°C to 350°C, in the presence of a catalyst, comprising reducing the pressure of the mixture from the reactor to between 50 to 500 bars, and separating the liquid polymer and gaseous monomer constituting said mixture under this pressure characterized in that separation under pressure is effected in a device according to claim 1, and in that the entry speed of the gases into said cyclone is between 0.5 and 20 m/second.

15. A process according to claim 14, characterized in that separation under pressure is effected in a device according to claim 13, and in that the gas supplied is ethylene at a pressure below the pressure prevailing in said cylindrical enclosure.

16. A process according to claim 15, characterized in that the flow rate of the ethylene supplied is less than 30% of the flow rate of the mixture from said reactor.

0 002 988

FIG. 1

FIG. 2

1